(19) Europäisches Patentamt
European Patent Office
Office européen des brevets

(11) **EP 2 764 220 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **12778231.6**

(22) Anmeldetag: **05.10.2012**

(51) Int Cl.:
*F01N 3/20* (2006.01)     *F01N 11/00* (2006.01)
*F01N 9/00* (2006.01)     *G01M 15/10* (2006.01)

(86) Internationale Anmeldenummer:
**PCT/EP2012/004173**

(87) Internationale Veröffentlichungsnummer:
**WO 2013/050167 (11.04.2013 Gazette 2013/15)**

(54) **VERFAHREN ZUM ÜBERWACHEN EINER ABGASANLAGE**

METHOD FOR MONITORING AN EXHAUST SYSTEM

PROCÉDÉ DE SURVEILLANCE D'UN SYSTÈME D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2011 DE 102011115328**

(43) Veröffentlichungstag der Anmeldung:
**13.08.2014 Patentblatt 2014/33**

(73) Patentinhaber: **MTU Friedrichshafen GmbH**
**88045 Friedrichshafen (DE)**

(72) Erfinder:
• **NIEMEYER, Jens**
**88045 Friedrichshafen (DE)**

• **TOTH, Aron**
**88048 Friedrichshafen (DE)**
• **SPAEDER, Tim**
**88085 Langenargen (DE)**

(74) Vertreter: **Kordel, Mattias**
**Gleiss Große Schrell und Partner mbB**
**Patentanwälte Rechtsanwälte**
**Leitzstrasse 45**
**70469 Stuttgart (DE)**

(56) Entgegenhaltungen:
**EP-A- 2 182 191     US-A1- 2011 143 449**

**Beschreibung**

Die Erfindung betrifft ein Verfahren und eine Anordnung zum Überwachen einer Abgasanlage.

Es werden Abgasanlagen verwendet, um die Schadstoffanteile der Abgase, die beim Betrieb eines Verbrennungsmotors entstehen, abzubauen. Die verbleibenden Abgase werden dann abgeleitet. Die Abgasanlage besteht regelmäßig aus mehreren Teilen, nämlich einem oder mehreren Schalldämpfern, Rohren und einem Katalysator.

Insbesondere Katalysatoren dienen zur Abgasbehandlung bzw. zur Nachbehandlung, um Schadstoffemissionen im Abgas zu reduzieren. Dabei sind unterschiedliche Arten von Katalysatoren, wie bspw. Dreiwegekatalysatoren, ungeregelte Katalysatoren, Oxidationskatalysatoren und SCR-Katalysatoren, bekannt. In SCR-Katalysatoren wird bspw. als Verfahren zur Reduktion von Stickoxiden die sogenannte selektive katalytische Reduktion (SCR: Selective Catalytic Reduction) eingesetzt.

Um die Funktionsfähigkeit des Katalysators zu überwachen, sind unterschiedliche Verfahren bekannt.

Die Druckschrift DE 40 27 207 A1 beschreibt ein Verfahren zur Überwachung der katalytischen Aktivität eines Katalysators im Abgassystem einer Brennkraftmaschine, bei dem eine Auswertung von Signalen, die von dem Katalysator zugeordneten Messfühlern bereitgestellt werden, durchgeführt wird. Dabei werden Signale von mindestens zwei Messfühlern aufgenommen, die erfasste Messgrößen über einen längeren Zeitraum beobachten und es wird ein Mittelwert gebildet. Die katalytische Aktivität wird durch Vergleich des Mittelwerts mit einem vorgegebenen Grenzwert ermittelt.

Aus der Druckschrift DE 43 08 894 A1 ist ein Verfahren zur Überprüfung der Konvertierung eines Katalysators in Kraftfahrzeugen mit Brennkraftmaschinen bekannt. Die Überprüfung erfolgt mittels einer Temperaturmessung vor und hinter dem Katalysator, wobei eine Temperaturdifferenz ermittelt wird. Die Überprüfung wird dabei im Schub des Kraftfahrzeugs durchgeführt. Der Katalysator wird als funktionsfähig angesehen, wenn u.a. die Temperaturdifferenz ansteigt und die Temperatur hinter dem Katalysator während der Überprüfung in einem vorgegebenen Bereich liegt.

Die Druckschrift DE 42 11 092 A1 beschreibt ein Verfahren und eine Vorrichtung zum Beurteilen der Funktionsfähigkeit eines Katalysators. Bei diesem Verfahren wird die Erkenntnis genutzt, dass die Konvertierungsbeginn-Temperatur des Katalysators um so höher liegt, je stärker der Katalysator gealtert ist.

Die Druckschrift US 2011/0143449 A1 beschreibt ein Verfahren zum Überwachen einer Abgasanlage, bei dem festgestellt wird, ob ein Katalysator vorhanden ist oder nicht. Hierzu wird eine gemessene Zeitverzögerung mit einer abgeschätzten Zeitverzögerung verglichen.

Um zu überprüfen, ob ein Katalysator entfernt wurde, ist es bekannt, einen Differenzdrucksensor über dem Katalysator anzuordnen. Dieser hat die Aufgabe zu erkennen, ob ein Katalysator installiert ist oder ob dieser bspw. von dem Betreiber entfernt wurde. Bei vielen Anwendungen ist der Differenzdrucksensor nur wegen der Leerrohrerkennung verbaut. Dadurch entstehen zusätzliche Kosten.

Es wird ein Verfahren zur Überwachung der Funktionsfähigkeit einer Abgasanlage vorgestellt, das es ermöglicht zu überprüfen, ob ein Katalysator eingebaut ist oder nicht.

Das beschriebene Verfahren dient zum Überwachen einer Abgasanlage eines Verbrennungsmotors, welche zum Ableiten von dem Verbrennungsmotor erzeugten Abgasen in Strömungsrichtung vorgesehen ist nach den Merkmalen des Anspruchs 1. Das Verfahren wird zweckmäßigerweise während eines Temperatursprungs durchgeführt.

Es kann vorgesehen sein, dass der erwartete Temperaturverlauf hinter dem Einbauort mittels einer Simulation, bspw. mittels einer Online-Simulation, ermittelt wird.

In Ausgestaltung wird bei einer vorgebbaren Abweichung zwischen dem ermittelten erwarteten Temperaturverlauf hinter dem Einbauort und dem gemessenen zweiten Temperaturverlauf hinter dem Einbauort ein Fehler in einem Speicher gesetzt.

Dieser Speicher kann in vorgebbaren zeitlichen Abständen ausgelesen werden.

Alternativ oder ergänzend kann der Speicher bei einem konstanten ersten Temperaturverlauf vor dem Einbauort ausgelesen werden.

Es wird weiterhin eine Anordnung zum Überwachen einer Abgasanlage eines Verbrennungsmotors nach den Merkmalen des Anspruchs 8 vorgestellt, welche zum Ableiten von dem Verbrennungsmotor erzeugten Abgasen in Strömungsrichtung vorgesehen ist. Die Anordnung dient zur Durchführung eines Verfahrens der vorstehend beschriebenen Art.

Die Anordnung weist in Ausgestaltung einen Speicher zum Setzen eines Fehlers bei einer vorgebbaren Abweichung zwischen dem ermittelten erwarteten Temperaturverlauf hinter dem Einbauort und dem gemessenen zweiten Temperaturverlauf hinter dem Einbauort auf.

Das Verfahren ist insbesondere für alle Anwendungen mit SCR-Katalysatoren geeignet, wobei ein Differenzdrucksensor nicht benötigt wird.

Somit ist die Möglichkeit gegeben zu überprüfen, ob ein Katalysator entfernt wurde. Eine Entfernung würde dazu führen, dass die Emissionen nicht eingehalten würden.

Mittels vorhandener Temperatursensoren vor und nach dem Katalysator werden die Temperaturverläufe ermittelt. Auf geeignete Art und Weise unter Berücksichtigung der Abgasmasse werden die Temperaturverläufe verarbeitet und miteinander verglichen. Im Moment eines Abgastemperatursprungs wird eine bestimmte zeitliche Verschiebung der beiden Temperaturverläufe erwartet. Ist dies nicht der Fall, so kann von einem entfernten Katalysator ausgegangen werden.

Der Einsatz eines Differenzdrucksensors über dem Katalysator, der unter anderem die Aufgabe hat zu erkennen, ob ein Katalysator installiert ist oder aber durch den Betreiber entfernt worden ist, entfällt somit. Damit werden Sensor-, Verkabelungs-, Schlauch- und Wartungskosten eingespart. Außerdem kann die Ausführung des Abgasnachbehandlungsreaktors einfacher ausfallen, da zwei Messstutzen weniger eingebaut werden müssen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird nachfolgend unter Bezugnahme auf die Zeichnung ausführlich beschrieben.

Figur 1     zeigt eine Ausführungsform der beschriebenen Abgasanlage.

Figur 2     zeigt in vier Graphen Temperaturverläufe.

Figur 3     zeigt in einem Flussdiagramm eine Ausführung des Verfahrens zur Überprüfung einer Abgasanlage mittels einer beschriebenen Anordnung.

Figur 4     zeigt in einem Flussdiagramm ein Verfahren zur Stationärerkennung.

Figur 5     zeigt in einem Flussdiagramm ein Verfahren zur Berücksichtigung der Abgasmenge.

Figur 6     zeigt in einem Flussdiagramm den Ablauf einer Auswertung in einer dafür vorgesehenen Auswertelogik.

Figur 7     zeigt Temperaturverläufe.

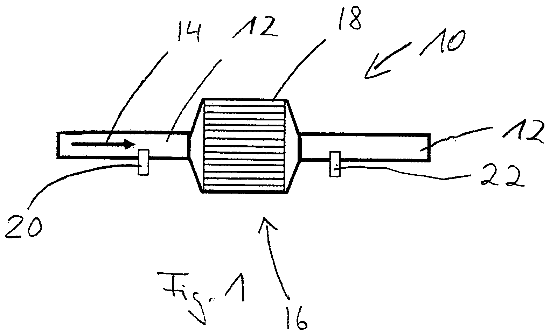

In Figur 1 ist in einer schematischen Darstellung eine Abgasanlage wiedergegeben, die insgesamt mit der Bezugsziffer 10 bezeichnet ist. Die Darstellung zeigt einen Abgasstrang 12, in dem Abgas in Strömungsrichtung (Pfeil 14) abgeleitet wird. In dem Abgasstrang 12 und damit in der Abgasanlage 10 ist an einem Einbauort 16 ein Katalysator 18 vorgesehen, durch den das Abgas in dem Abgasstrang 12 strömt, um dieses zu behandeln bzw. nachzubehandeln und auf diese Weise Schadstoffanteile im Abgas zu reduzieren.

In Strömungsrichtung 14 vor dem Einbauort 16 und damit vor dem Katalysator 18 ist ein erster Temperatursensor 20 angeordnet, in Strömungsrichtung 14 hinter dem Einbauort 16 ist ein zweiter Temperatursensor 22 vorgesehen.

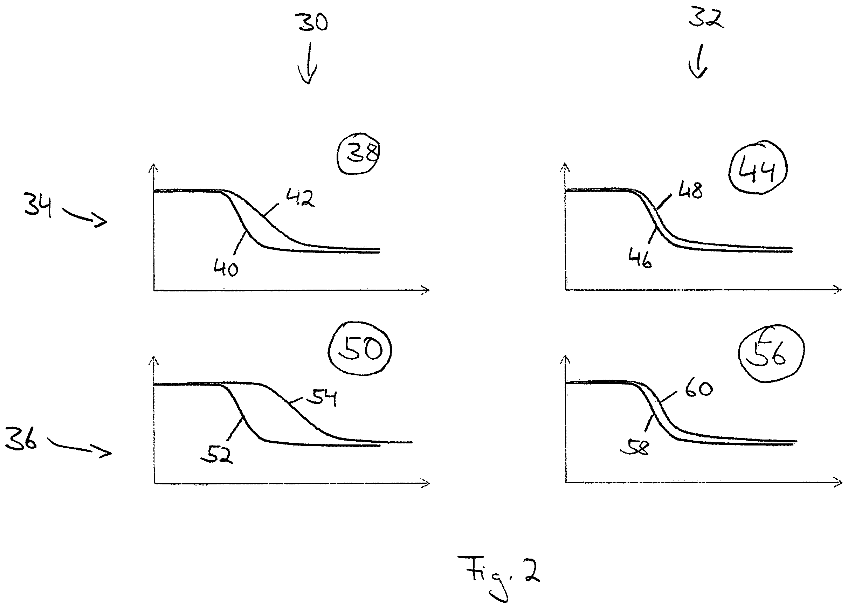

In Figur 2 sind in vier Graphen Temperaturverläufe vor und nach einem Katalysator bzw. einem Einbauort bei einem Temperatursprung wiedergegeben. Dabei sind in einer ersten Spalte Temperaturverläufe mit einem vorhandenen Katalysator und in einer zweiten Spalte 32 Temperaturverläufe bei entferntem Katalysator dargestellt. In einer ersten Zeile 34 sind Temperaturverläufe bei hoher Abgasmenge und in einer zweiten Spalte Temperaturverläufe bei niedriger Abgasmenge gezeigt. In den dargestellten Graphen ist jeweils an einer Ordinate die Temperatur in °C über der Zeit in s an einer Abszisse aufgetragen.

Ein erster Graph 38 zeigt einen ersten Temperaturverlauf 40, der den Verlauf der Temperatur vor einem Einbauort bei einem Temperatursprung wiedergibt. Ein zweiter Temperaturverlauf 42 zeigt den entsprechenden Verlauf der Temperatur nach dem Einbauort.

In einem zweiten Graphen 44 ist ein erster Temperaturverlauf 46 dargestellt, der den Verlauf der Temperatur vor einem Einbauort bei einem Temperatursprung wiedergibt. Ein zweiter Temperaturverlauf 48 zeigt den entsprechenden Verlauf der Temperatur nach dem Einbauort.

In einem dritten Graphen 50 ist ein erster Temperaturverlauf 52 wiedergegeben, der den Verlauf der Temperatur vor einem Einbauort bei einem Temperatursprung wiedergibt. Ein zweiter Temperaturverlauf 54 zeigt den entsprechenden Verlauf der Temperatur nach dem Einbauort.

Ein vierter Graph 56 gibt einen ersten Temperaturverlauf 58, der den Verlauf der Temperatur vor einem Einbauort bei einem Temperatursprung wiedergibt. Ein zweiter Temperaturverlauf 60 zeigt den entsprechenden Verlauf der Temperatur nach dem Einbauort.

Die vier Graphen 38, 44, 50 und 56 verdeutlichen, dass ein fehlender Katalysator dazu führt, dass sich die beiden Temperaturverläufe 40 und 42, 46 und 48, 52 und 54 bzw. 58 und 60 im Bereich des Temperatursprungs annähern. Der Katalysator hat somit einen Einfluss auf den Temperaturverlauf hinter dem Einbauort. Dieser Einfluss ist, wie in der zweiten Zeile 36 deutlich zu erkennen ist, bei niedriger Abgasmasse deutlicher ausgeprägt. Das Fehlen eines Katalysators ist insbesondere bei einem Temperatursprung deutlich zu erkennen.

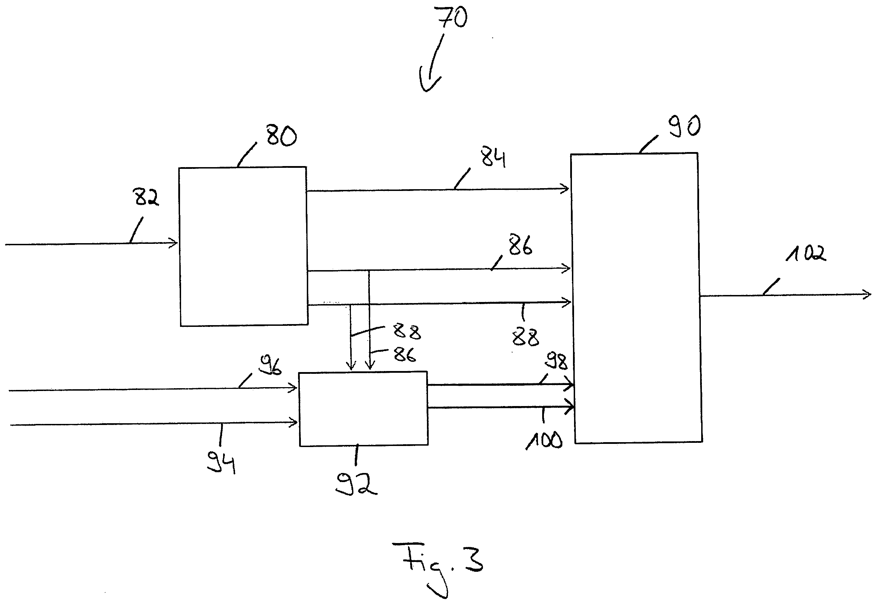

In Figur 3 ist in einem Flussdiagramm eine Ausführung des Verfahrens zur Überprüfung einer Abgasanlage verdeutlicht. Hierzu ist in der Darstellung eine Ausführung der beschriebenen Anordnung gezeigt, die insgesamt mit der Bezugsziffer 70 bezeichnet ist.

In einem ersten Block 80 (Dynamik/Stationär Erkennung) erfolgt eine Erkennung, ob ein Temperatursprung vorliegt. Hierzu wird die Temperatur (TvorKat_Messung) vor dem Einbauort aufgenommen (Signal 82). Es wird somit festgestellt, ob ein positiver Temperatursprung oder ein negativer Temperatursprung vorliegt. Entsprechend wird ausgegeben, ob die Temperatur konstant bzw. stationär ist (Signal 84), ein positiver Sprung (Signal 86) oder ein negativer Sprung (Signal 88) vorliegt. Diese Information wird an eine Auswertelogik 90 und einen zweiten Block 92, der die Abgasmasse berücksichtigt, weitergegeben.

In dem zweiten Block 92 (Abweichung Integrator) geht die Abgasmasse (Signal 94) und ein Signal 96 ein, das ein Delta zwischen einer Temperaturmessung und einer Simulation (Delta_Temperatur_Messung_Simulation) und damit eine Differenz der Temperaturmessung nach dem Einbauort zu einer Simulation der Temperatur nach dem Katalysator (TnachKat_Messung - TnachKat_Simulation) berücksichtigt. Aus diesem zweiten Block 92 wird ein Signal 98 zu einer möglichen positiven Abweichung) und ein Signal 100 zu einer möglichen negativen Abweichung) ausgegeben.

In der Auswertelogik 90 wird eine mögliche positive oder negative Abweichung integriert und unter Berücksichtigung der Differenz der Messung der Temperatur vor dem Einbauort zu der Temperatur nach dem Einbauort bestimmt, ob ein Leerrohrfehler (Signal 102) vorliegt. Wird somit festgestellt, dass der Katalysator nicht am Einbauort eingebaut ist, d.h. dass ein Leerrohrfehler gegeben ist, kann das entsprechende Signal 102 (LeerrohrFehler) ausgegeben werden.

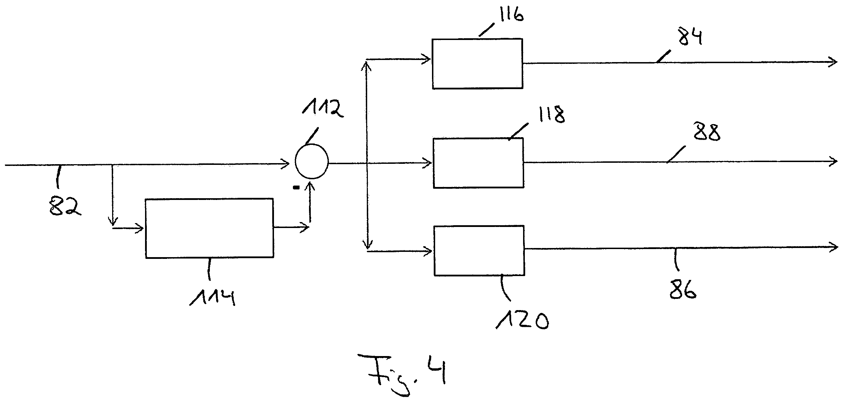

In Figur 4 ist in einem Flussdiagramm ein Verfahren zur Stationärerkennung dargestellt und damit das Verfahren, das im ersten Block 80 gemäß Figur 3 durchgeführt wird.

Es werden Werte der Temperaturmessung vor dem Einbauort herangezogen (Signal 82). Diese Werte werden einerseits direkt einem Differenzglied 112 und andererseits über ein Verzögerungsglied 114 wiederum dem Differenzglied 112 zugeführt. Die Verzögerung beträgt bspw. 10 s. Auf diese Weise kann ein Temperatursprung festgestellt werden.

Liegt kein Temperatursprung bzw. liegt ein Temperatursprung unterhalb einer vorgebbaren Schwelle vor, so gibt eine erste Einheit 116 (Abs < Limit) das entsprechende Signal 84 (Temperatur Stationär) aus. Wird ein negativer Sprung erkannt, so gibt eine zweite Einheit 118 (> Limit) das entsprechende Signal 88 (negativer Sprung) aus. Im Falle eines positiven Sprungs gibt eine dritte Einheit 120 (< -Limit) das entsprechende Signal 86 (positiver Sprung) aus.

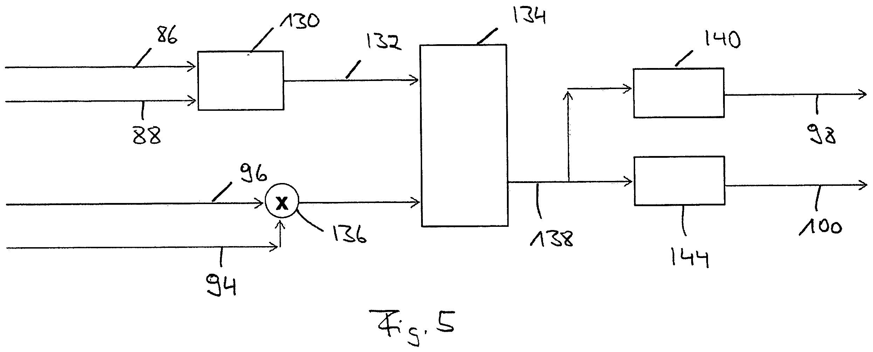

In Figur 5 ist in einem Flussdiagramm ein Verfahren zur Berücksichtigung der Abgasmenge und damit das Verfahren, das in dem zweiten Block 92 gemäß Figur 3 durchgeführt wird, dargestellt.

In ein ODER-Glied 130 geht das Signal 86, das einen positiven Sprung anzeigt, und das Signal 88, das einen negativen Sprung anzeigt, ein. Ist ein negativer oder ein positiver Sprung gegeben, wird ein Enable-Signal 132 gesetzt und in einen Integrator 134 eingegeben. In diesen Integrator 134 geht weiterhin das Signal 96, das ein Delta zwischen einer Temperaturmessung und einer Simulation (Delta_Temperatur_Messung_Simulation) und damit eine Differenz der Temperaturmessung nach dem Einbauort zu einer Simulation der Temperatur nach dem Katalysator (TnachKat_Messung - TnachKat_Simulation) berücksichtigt, und das Signal 94, das die Abgasmasse kennzeichnet, über ein Multiplikationsglied 136 ein. Der Integrator 134 integriert, solange das Enable-Signal 132 gesetzt ist.

Der Integrator 134 gibt ein Signal 138 aus, das einen Indikator für einen Lehrrohrfehler (Fehler_Leerrohrindikator) darstellt. Liegt der Wert des Signals 138 über einer Schwelle, wird von einer ersten Einheit 140 das Signal 98, das eine positive Abweichung anzeigt, ausgegeben. Ist der Wert das Signals 138 unterhalb einer negativen Schwelle, so gibt eine zweite Einheit 144 (< -Limit) das Signal 100 aus, das eine negative Abweichung anzeigt.

Während eines Temperatursprungs ergibt sich bei fehlendem Katalysator eine zu große Abweichung. Es wird die Differenz zwischen der erwarteten und der realen Temperatur nach dem Einbauort mit der Abgasmasse multipliziert und integriert.

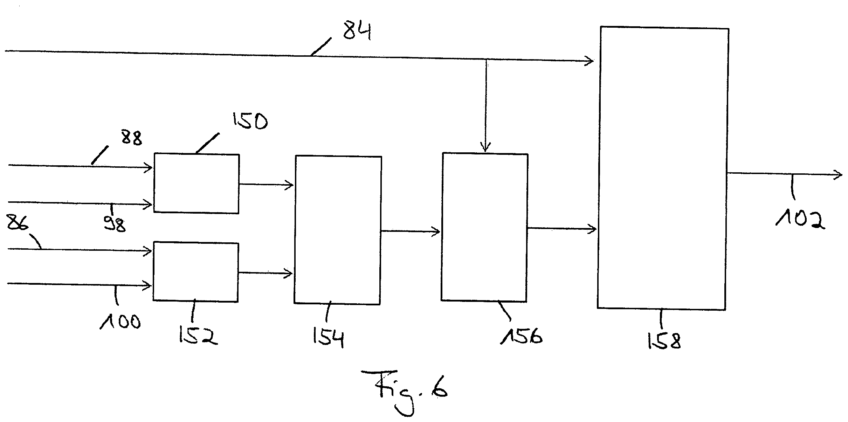

Figur 6 zeigt in einem Flussdiagramm den Ablauf des Verfahrens in der Auswertelogik 90 gemäß Figur 3. In ein erstes UND-Glied 150 geht das Signal 88, das einen negativen Sprung kennzeichnet, und das Signal 98, das eine positive Abweichung anzeigt, ein. In ein zweites UND-Glied 152 geht das Signal 86, das einen positiven Sprung anzeigt, und das Signal 100, das eine negative Abweichung kennzeichnet, ein. Die Ausgänge der beiden UND-Glieder 150 und 152 werden einem ODER-Glied 154 zugeführt. Wird somit bei einem negativen Sprung eine positive Abweichung oder bei einem positiven Sprung eine negative Abweichung erkannt, so erfolgt ein Fehlereintrag in einen Speicher 156. Dieser Speicher 156 wird ausgelesen, sobald die Temperatur konstant ist (Signal 84) und dann in einer Einheit 158, die die Fehler zählt, ausgewertet. Wird eine vorgebbare Schwelle überschritten, so wird das Signal 102 (LeerrohrFehler) ausgegeben.

Es wird somit in Ausgestaltung während eines Temperatursprungs immer geprüft, ob eine zu große Abweichung vorliegt. Ist dies der Fall, so wird dies als Fehler gespeichert. Dieser Fehler kann während eines Temperatursprungs nur als ein Fehler gezählt werden.

Es gilt:

$$TnachKat\_Simulation = f(Abgasmasse, TvorKat\_Messung)$$

$$\Delta\_Temperatur\_Messung\_Simulation = TnachKat\_Messung - TnachKat\_Simulation,$$

$$Fehler\_Leerrohrindikator = \int_{Enable0->1}^{Enable1->0} \Delta\_Temperatur\_Messung\_Simulation * Abgasmasse * dt$$

Es erfolgt somit eine Auswertung der Temperatursensoren im Vergleich zu einer Online-Simulation. Wenn die Simulation und das Modell abweichen, ist dies ein Fehler, was auf einen fehlenden Katalysator hinweisen kann.

Durch die Berücksichtigung der Abgasmasse funktioniert die Auswertung in jedem Motorbetriebspunkt, da der Fehler_Leerrohrindikator der fehlenden Energie in der Abgasanlage entspricht.

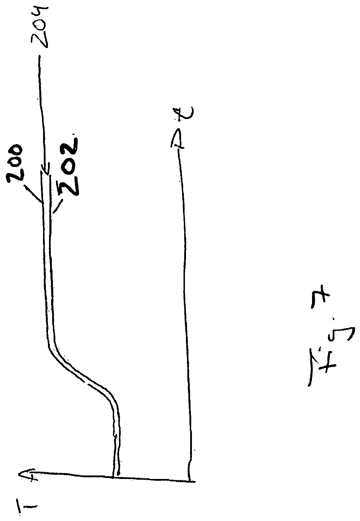

In Figur 7 sind in einem Graphen Temperaturverläufe über der Zeit aufgetragen. Ein erster Verlauf 200 zeigt den gerechneten, d. h. den ermittelten erwarteten, Temperaturverlauf nach dem Katalysator und ein zweiter Verlauf 202 den gemessenen Verlauf nach dem Katalysator. Die beiden Verläufe 200 und 202 werden miteinander verglichen, indem eine Fläche 204 zwischen den beiden ausgewertet wird. Dies geschieht durch Integration. Ist die Fläche 204 größer als ein vorgegebener Wert, so wird auf einen fehlenden Katalysator geschlossen. Ist die Fläche 204 kleiner als der Wert, so wird von einem vorhandenen Katalysator ausgegangen.

Das Verfahren kann, wie hier dargestellt, bei einem Temperatursprung durchgeführt werden. Dies ist jedoch nicht unbedingt erforderlich. Bei der Auswertung der Fläche kann auch die Abgasmasse, bspw. durch Multiplikation, berücksichtigt werden.

**Patentansprüche**

1. Verfahren zum Überwachen einer Abgasanlage (10) eines Verbrennungsmotors, welche zum Ableiten von dem Verbrennungsmotor erzeugten Abgasen in Strömungsrichtung (14) vorgesehen ist, wobei in der Abgasanlage (10) ein zum Einbau eines Katalysators (18) geeigneter Einbauort (16) vorgesehen ist, wobei ein erster Temperaturverlauf (40, 46, 52, 58) in Strömungsrichtung (14) des Abgases vor dem Einbauort (16) und ein zweiter Temperaturverlauf (42, 48, 54, 60, 202) in Strömungsrichtung (14) hinter dem Einbauort (16) über die Zeit gemessen werden, anhand des gemessenen ersten Temperaturverlaufs (40, 46, 52, 58) vor dem Einbauort (16) ein erwarteter Temperaturverlauf (200) hinter dem Einbauort (16) ermittelt wird und der ermittelte erwartete Temperaturverlauf (200) hinter dem Einbauort (16) mit dem gemessenen zweiten Temperaturverlauf (42, 48, 54, 60, 202) hinter dem Einbauort (16) verglichen wird, um zu bestimmen, ob der Katalysator (18) an dem Einbauort (16) eingebaut ist, wobei eine Fläche (204) zwischen den beiden Verläufen durch Integration ausgewertet wird.

2. Verfahren nach Anspruch 1, das während eines Temperatursprungs durchgeführt wird.

3. Verfahren nach Anspruch 1 oder 2, bei dem der erwartete Temperaturverlauf hinter dem Einbauort (16) mittels einer Simulation ermittelt wird.

4. Verfahren nach einem der Ansprüche 1 bis 3, das für eine Abgasanlage (10) mit einem SCR-Katalysator durchgeführt wird.

5. Verfahren nach einem der Ansprüche 1 bis 4, bei dem bei einer vorgebbaren Abweichung zwischen dem ermittelten erwarteten Temperaturverlauf hinter dem Einbauort (16) und dem gemessenen zweiten Temperaturverlauf (42, 48, 54, 60) hinter dem Einbauort (16) ein Fehler in einem Speicher (156) gesetzt wird.

6. Verfahren nach Anspruch 5, bei dem der Speicher (156) in vorgebbaren zeitlichen Abständen ausgelesen wird.

7. Verfahren nach Anspruch 5, bei dem der Speicher (156) bei einem konstanten ersten Temperaturverlauf (40, 46, 52, 58) vor dem Einbauort (16) ausgelesen wird.

8. Anordnung zum Überwachen einer Abgasanlage (10) eines Verbrennungsmotors, welche zum Ableiten von dem Verbrennungsmotor erzeugten Abgasen in Strömungsrichtung (14) vorgesehen ist, zur Durchführung eines Verfahrens nach einem der Ansprüche 1 bis 7, wobei in der Abgasanlage (10) ein zum Einbau eines Katalysators (18) geeigneter Einbauort (16) vorgesehen ist, wobei die Anordnung (70) einen ersten Temperatursensor (20) zum Messen eines ersten Temperaturverlaufs (40, 46, 52, 58) über die Zeit in Strömungsrichtung (14) vor dem Einbauort (16) und einen zweiten Temperatursensor (22) zum Messen eines Temperaturverlaufs (42, 48, 54, 60) über die Zeit in Strömungsrichtung (14) hinter dem Einbauort (16) aufweist, wobei die Anordnung (70) dazu ausgebildet ist, anhand des gemessenen ersten Temperaturverlaufs (40, 46, 52, 58) vor dem Einbauort (16) einen erwarteten Temperaturverlauf hinter dem Einbauort (16) zu ermitteln und den ermittelten erwarteten Temperaturverlauf hinter dem Einbauort (16) mit dem gemessenen zweiten Temperaturverlauf (42, 48, 54, 60) zu vergleichen, um zu bestimmen, ob der Katalysator (18) an dem Einbauort (16) eingebaut ist, wobei eine Fläche (204) zwischen den beiden Verläufen durch Integration ausgewertet wird.

9. Anordnung nach Anspruch 7, mit einem Speicher (156) zum Setzen eines Fehlers bei einer vorgebbaren Abweichung zwischen dem ermittelten erwarteten Temperaturverlauf hinter dem Einbauort (16) und dem gemessenen zweiten Temperaturverlauf (42, 48, 54, 60) hinter dem Einbauort (16).

**Claims**

1. Method for monitoring an exhaust system (10) of an internal combustion engine, which exhaust system is provided for discharging, in a flow direction (14), exhaust gases that are generated by the internal combustion engine, wherein, in the exhaust system (10), there is provided an installation location (16) suitable for the installation of a catalytic converter (18), wherein a first temperature profile (40, 46, 52, 58) is measured over time upstream of the installation location (16) as viewed in the flow direction (14) of the exhaust gas and a second temperature profile (42, 48, 54, 60, 202) is measured over time downstream of the installation location (16) as viewed in the flow direction (14), an expected temperature profile (200) downstream of the installation location (16) is determined on the basis of the measured first temperature profile (40, 46, 52, 58) upstream of the installation location (16), and the determined expected temperature profile (200) downstream of the installation location (16) is compared with the measured second temperature profile (42, 48, 54, 60, 202) downstream of the installation location (16) in order to determine whether the catalytic converter (18) is installed at the installation location (16), wherein an area (204) between the two profiles is evaluated by integration.

2. Method according to Claim 1, which is carried out during a temperature step change.

3. Method according to Claim 1 or 2, in which the expected temperature profile downstream of the installation location (16) is determined by means of a simulation.

4. Method according to one of Claims 1 to 3, which is carried out for an exhaust system (10) with an SCR catalytic converter.

5. Method according to one of Claims 1 to 4, in which, if there is a predefinable deviation between the determined expected temperature profile downstream of the installation location (16) and the measured second temperature profile (42, 48, 54, 60) downstream of the installation location (16), a fault is recorded in a memory (156).

6. Method according to Claim 5, in which the memory (156) is read out at predefinable time intervals.

7. Method according to Claim 5, in which the memory (156) is read out if a first temperature profile (40, 46, 52, 58) upstream of the installation location (16) is constant.

8. Arrangement for monitoring an exhaust system (10) of an internal combustion engine, which exhaust system is provided for discharging, in a flow direction (14), exhaust gases that are generated by the internal combustion engine, for carrying out a method according to one of Claims 1 to 7, wherein, in the exhaust system (10), there is provided an installation location (16) suitable for the installation of a catalytic converter (18), wherein the arrangement (70) has a first temperature sensor (20) for measuring a first temperature profile (40, 46, 52, 58) over time upstream of the installation location (16) as viewed in the flow direction (14) and has a second temperature sensor (22) for measuring a temperature profile (42, 48, 54, 60) over time downstream of the installation location (16) as viewed in the flow direction (14), wherein the arrangement (70) is designed to determine an expected temperature profile downstream of the installation location (16) on the basis of the measured first temperature profile (40, 46, 52, 58) upstream of the installation location (16) and to compare the determined expected temperature profile downstream of the installation location (16) with the measured second temperature profile (42, 48, 54, 60) in order to determine whether the catalytic converter (18) is installed at the installation location (16), wherein an area (204) between the two profiles is evaluated by integration.

9. Arrangement according to Claim 7, having a memory (156) for recording a fault if there is a predefinable deviation between the determined expected temperature profile downstream of the installation location (16) and the measured second temperature profile (42, 48, 54, 60) downstream of the installation location (16).

## Revendications

1. Procédé de surveillance d'une installation d'échappement (10) d'un moteur à combustion interne, qui est prévue pour évacuer dans la direction d'écoulement (14) des gaz d'échappement générés par le moteur à combustion interne, un emplacement d'installation (16) approprié pour l'installation d'un catalyseur (18) étant prévu dans l'installation d'échappement (10), une première courbe de température (40, 46, 52, 58) dans la direction d'écoulement (14) du gaz d'échappement avant l'emplacement d'installation (16) et une deuxième courbe de température (42, 48, 54, 60, 202) dans la direction d'écoulement (14) derrière l'emplacement d'installation (16) étant mesurées dans le temps, une courbe de température attendue (200) derrière l'emplacement d'installation (16) étant déterminée à l'aide de la première courbe de température mesurée (40, 46, 52, 58) avant l'emplacement d'installation (16) et la courbe de température attendue déterminée (200) derrière l'emplacement d'installation (16) étant comparée avec la deuxième courbe de température mesurée (42, 48, 54, 60, 202) derrière l'emplacement d'installation (16), afin de déterminer si le catalyseur (18) est installé à l'emplacement d'installation (16), une surface (204) entre les deux courbes étant analysée par intégration.

2. Procédé selon la revendication 1, qui est mis en oeuvre pendant un saut de température.

3. Procédé selon la revendication 1 ou 2, dans lequel la courbe de température attendue derrière l'emplacement d'installation (16) est déterminée par simulation.

4. Procédé selon l'une quelconque des revendications 1 à 3, qui est mis en oeuvre pour une installation d'échappement (10) avec un catalyseur SCR.

5. Procédé selon l'une quelconque des revendications 1 à 4, dans lequel, dans le cas d'un écart prédéfinissable entre la courbe de température attendue déterminée derrière l'emplacement d'installation (16) et la deuxième courbe de température mesurée (42, 48, 54, 60) derrière l'emplacement d'installation (16), une erreur est consignée dans une mémoire (156).

6. Procédé selon la revendication 5, dans lequel la mémoire (156) est lue à intervalles temporels prédéfinissables.

7. Procédé selon la revendication 5, dans lequel la mémoire (156) est lue dans le cas d'une première courbe de température constante (40, 46, 52, 58) avant l'emplacement d'installation (16).

8. Agencement pour surveiller une installation d'échappement (10) d'un moteur à combustion interne, qui est prévue pour évacuer dans la direction d'écoulement (14) des gaz d'échappement générés par le moteur à combustion interne, pour mettre en oeuvre un procédé selon l'une quelconque des revendications 1 à 7, un emplacement d'installation (16) approprié pour l'installation d'un catalyseur (18) étant prévu dans l'installation d'échappement (10), l'agencement (70) présentant un premier capteur de température (20) pour mesurer une première courbe de température (40, 46, 52, 58) dans le temps dans la direction d'écoulement (14) avant l'emplacement d'installation (16), et un deuxième capteur de température (22) pour mesurer une courbe de température (42, 48, 54, 60) dans le temps dans la direction d'écoulement (14) derrière l'emplacement d'installation (16), l'agencement (70) étant réalisé de manière à déterminer à l'aide de la première courbe de température mesurée (40, 46, 52, 58) avant l'emplacement d'installation (16) une courbe de température attendue derrière l'emplacement d'installation (16), et pour comparer la courbe de température attendue déterminée derrière l'emplacement d'installation (16) avec la deuxième courbe de température mesurée (42, 48, 54, 60), afin de déterminer si le catalyseur (18) est installé à l'emplacement d'installation (16), une surface (204) entre les deux courbes étant analysée par intégration.

9. Agencement selon la revendication 7, comprenant une mémoire (156) pour consigner une erreur en cas d'écart prédéfinissable entre la courbe de température attendue déterminée derrière l'emplacement d'installation (16) et la deuxième courbe de température mesurée (42, 48, 54, 60) derrière l'emplacement d'installation (16).

Fig. 1

EP 2 764 220 B1

Fig. 3

Fig. 4

EP 2 764 220 B1

Fig. 5

Fig. 6

Fig. 7

EP 2 764 220 B1

**IN DER BESCHREIBUNG AUFGEFÜHRTE DOKUMENTE**

**In der Beschreibung aufgeführte Patentdokumente**

- DE 4027207 A1
- DE 4308894 A1
- DE 4211092 A1
- US 20110143449 A1